# EUROPÄISCHE PATENTANMELDUNG

(11) **EP 4 442 455 A1**
(43) Veröffentlichungstag der Anmeldung: **09.10.2024**
(21) Anmeldenummer: 24161746.3
(22) Anmeldetag: 06.03.2024
(51) Int. Cl.: B32B 18/00, C04B 35/46, C04B 35/488, C04B 35/622, C04B 35/626, C04B 35/634, C04B 35/64, C04B 35/645

(54) **KERAMISCHES VERBUNDBAUTEIL, DAS MINDESTENS EINEN ELEKTRISCH ISOLIERENDEN BEREICH UND MINDESTENS EINEN ELEKTRISCH LEITENDEN BEREICH AUFWEIST UND VER-FAHREN ZU SEINER HERSTELLUNG**

(30) Priorität: 22.03.2023 DE 102023202559
(71) Anmelder: Fraunhofer-Gesellschaft zur Förderung der angewandten Forschung e.V., 80686 München (DE)
(72) Erfinder: Schönfeld, Katrin, 01277 Dresden (DE); Martin, Hans-Peter, 01277 Dresden (DE)
(74) Vertreter: Pfenning, Meinig & Partner mbB

(57) **Zusammenfassung**

Bei dem keramischen Verbundbauteil weist mindestens einen elektrisch isolierenden Bereich und mindestens einen elektrisch leitenden Bereich auf, die stoffschlüssig durch eine gemeinsame Sinterung miteinander verbunden sind. Ein elektrisch isolierender Bereich besteht aus TiO₂ oder mehr als 40 Masse-% TiO₂ und weniger als 60 Masse-% ZrO₂ als Feststoffanteil und
mindestens ein elektrisch leitender Bereich besteht aus dotiertem TiO₂, das mit TiO₂ und zusätzlich weniger als 50 Masse-% und mindestens einem Anteil von 0,01 Masse-% eines elektrisch leitenden Elements oder einem Oxid, Carbid oder Nitrid des elektrisch leitenden Elements dotiert ist. Das elektrisch leitende Element oder das Oxid, Carbid oder Nitrid dieses elektrisch dotierenden Elements weist einen lonenradius auf, der um maximal 20 % vom lonenradius von Titan abweicht.

## Beschreibung

Die Erfindung betrifft ein keramisches Verbundbauteil, das mindestens einen elektrisch isolierenden Bereich und mindestens einen elektrisch leitenden Bereich aufweist und ein Verfahren zu seiner Herstellung.

Komponenten für elektrische Funktionen müssen oft elektrische leitende Elemente bzw. Bereiche mit elektrischen isolierenden kombinieren. Wenn keramische Werkstoffe für derartige Komponenten erforderlich sind, ist eine solche Kombination technisch nicht immer umsetzbar, insbesondere wenn zwei keramische Komponenten zu verbinden sind. Zuverlässige Fügemethoden für ausschließlich oder überwiegend keramische Bauteile sind entweder kostenaufwändig oder oft technisch unbefriedigend.

Es ist daher gewünscht, dass elektrische Leiter (Komponente 1) und elektrischer Isolator (Komponente 2) unter Beibehaltung ihrer elektrischen Eigenschaften miteinander in einem Bauteil verbunden werden können, ohne dass ein zusätzliches Fügeverfahren oder eine unter Ausschluss von Luft mehrfache gesonderte Sinterung zum Einsatz kommen bzw. durchgeführt werden muss.

Bisherige technische Lösungen beinhalten die Metallisierung von Oberflächen, die Herstellung von Lot- oder Klebverbindungen zwischen elektrischem Leiter und elektrischem Isolator, die chemische Reaktion mit einer geeigneten speziellen Atmosphäre oder das mechanische Klemmen von metallischen Bauteilen auf einen keramischen Isolator. Eine Verbindung von keramischen Komponenten als Isolator und elektrischer Leiter als Verbundbauteil wurde bisher noch nicht zufriedenstellend gelöst.

So gibt es Verfahren bei denen elektrische Leiter auf keramische Körper in Form einer Suspension oder Paste aufgebracht werden, wobei darin elektrisch leitende Metalle enthalten sind, die gute elektrische Leiter sind aber sehr niedrige Sintertemperaturen erfordern und so eine gemeinsame Sinterung von Keramik und elektrischem Leiter ausgeschlossen sind. In der Regel werden dabei auch kostenintensive Edelmetalle eingesetzt.

Bekannte technische Lösungen beziehen sich auf die Herstellung von dielektrischem Material mit anderen Materialzusammensetzung, wie z.B. BaTiO₃ und MgO, Kombinationen mit Metallen, wie zum Beispiel Silber und Kupfer oder die Herstellung von Elektroden aus anderen Metalloxiden.

Es ist daher Aufgabe der Erfindung, Möglichkeiten für die Herstellung und den Aufbau keramischer Verbundbauteile aufzuzeigen, die elektrisch leitende Bereiche aufweisen und entweder vollständig oder überwiegend aus keramischem Material bestehen, wobei ein sicherer dauerhafter Verbund zwischen einem elektrischen isolierenden Bereich und mindestens einem elektrisch leitenden Bereich gesichert und eine kostengünstige Herstellung in einer einstufigen gemeinsamen Sinterung (Cosinterung) unter Luft möglich sein sollen.

Erfindungsgemäß wird diese Aufgabe mit einem keramischen Verbundbauteil, das die Merkmale des Anspruchs 1 aufweist, gelöst. Anspruch 6 betrifft ein Verfahren zur Herstellung solcher Verbundbauteile. Vorteilhafte Ausgestaltungen und Weiterbildungen der Erfindung können mit in abhängigen Ansprüchen bezeichneten Merkmalen realisiert werden.

Ein erfindungsgemäßes keramisches Verbundbauteil ist mit mindestens einem elektrisch isolierenden Bereich und mindestens einem elektrisch leitenden Bereich gebildet, die stoffschlüssig durch eine gemeinsame Sinterung miteinander verbunden sind.

Dabei ist der elektrisch isolierende Bereich aus nicht dotiertem TiO₂ oder mehr als 40 Masse-% nicht dotiertem TiO₂ und weniger als 60 Masse-% ZrO₂ als Feststoffanteil und mindestens ein elektrisch leitender Bereich aus dotiertem TiO₂, das mit TiO₂ und zusätzlich weniger als 50 Masse-% und mindestens einem Anteil von 0,01 Masse-% eines elektrisch leitenden Elements oder einem Oxid, Carbid oder Nitrid des elektrisch leitenden Elements dotiert

Das elektrisch leitende Element oder das Oxid, Carbid oder Nitrid dieses elektrisch leitenden Elements weist einen lonenradius auf, der um maximal 20 %, bevorzugt maximal 10 % vom lonenradius von Titan abweicht.

Es kann ein elektrisch leitendes Element für die Dotierung ausgewählt sein aus Nb, Ta, V, In, Ga, Sc, Ir, Cr, Ho, Ce und Ge. Das dotierende Element kann elementar oder als anorganische Verbindung, wie Oxid, Nitrid oder Carbid, über Einmischung definiert eingebracht werden.

Es kann auch mindestens ein elektrisch isolierender Bereich mit mindestens zwei elektrisch leitenden Bereichen stoffschlüssig verbunden sein, wobei die elektrisch leitenden Bereiche mit dotiertem TiO₂ und jeweils einem unterschiedlich großen Anteil des mindestens einen elektrisch leitenden Elements, eines Oxids, Carbids oder Nitrids des elektrisch leitenden Elements oder mit jeweils mindestens einem anderen elektrisch leitenden Element, Oxid, Carbid oder Nitrid des elektrisch leitenden Elements, das nach Anspruch 2 ausgewählt ist, gebildet sein, so dass elektrisch leitende Bereiche mit voneinander unterschiedlichen spezifischen elektrischem Widerstand vorhanden sind. Dies kann vorteilhaft genutzt werden, wenn man zum Beispiel bei einer Nutzung eines erfindungsgemäßen Verbundbauteils, das so ausgebildet ist, bei einer Beheizung lokal oder temporär unterschiedliche Temperaturen berücksichtigen und auf eine aufwändige elektrische Stromversorgung verzichten will. Auch kann ein elektrischer Kontakt bzw. ein elektrisch leitender Bereich einen sehr niedrigen elektrischen Widerstand und ein elektrischer Widerstand einen entsprechend der elektrischen Aufgabe deutlich höheren elektrischen Widerstand aufweisen.

Selbstverständlich können an einem Verbundbauteil auch mehr als ein elektrisch leitender Bereich vorhanden sein, wobei es möglich ist auch mehrere elektrisch leitende Bereiche mit jeweils gleichen elektrischen Parametern, die auch eine gleiche Zusammensetzung aufweisen können, an einem einzigen Verbundbauteil vorzusehen.

Unterschiedlich elektrisch leitende Bereiche kann man auch durch Auswahl geeigneter Pulver bei der Herstellung eines Verbundbauteils, die für verschiedene elektrisch leitende Bereiche eingesetzt werden und lediglich unterschiedliche Partikelgrößenverteilungen aufweisen aber jeweils gleich zusammen gesetzt sind, durch eine dichtere bzw. nicht ganz so dichte Sinterung erreichen. Ebenso können weitere Funktionen, wie z.B. eine Durchströmbarkeit des Verbundbauteils, Aufnahme von katalytisch wirksamen Substanzen oder Einlagerung von Fremdstoffen durch den porösen Bereich übernommen werden, die durch Einsatz elektrischer Effekte zu einem gewünschten Zeitpunkt kontrolliert werden.

Mindestens zwei elektrisch leitende Bereiche können in einem Abstand zueinander angeordnet und dadurch elektrisch isoliert voneinander getrennt aber auch
unmittelbar nebeneinander angeordnet sein und so auch einen Mehrschichtaufbau bilden können.

Das erfindungsgemäße Verbundbauteil kann eine Elektrode mit einem Elektrodenträger, insbesondere eine Plasmaelektrode, eine Glühkerze, ein elektrisches Widerstandsheizelement oder elektrischer Kontakt sein.

Für die Herstellung eines elektrisch isolierenden Bereichs wird eine erste Suspension oder Pulvergemisch, bestehend aus pulverförmigem TiO₂ mehr als 40 Masse-% TiO₂ und weniger als 60 Masse-% ZrO₂ als Feststoffanteil und einem organischen Binder und für die Herstellung eines elektrisch leitenden Bereichs wird eine Suspension einer Mischung aus pulverförmigem TiO₂ und weniger als 50 Masse-% und mindestens einem Anteil von 0,01 Masse-% eines elektrisch leitenden Elements oder einem Oxid, Carbid oder Nitrid des elektrisch leitenden Elements, dessen lonenradius um maximal 20 %, bevorzugt maximal 10 % vom lonenradius von Titan abweicht, und einem organischen Binder eingesetzt. Für die Herstellung einer Suspension ist es günstig wenn ein flüssiger organischer Binder oder eine Lösung eines organischen Binders eingesetzt wird.

Die zwei unterschiedlichen Suspensionen oder Pulver werden dann in eine jeweils gewünschte Form, als beispielsweise pressfähiges Granulat, Gießsuspension, Folie oder in mittels keramischer Formgebungstechnologien verarbeitbarer Form und miteinander in direkten Kontakt gebracht und anschließend werden die so miteinander verbundenen Bereiche gemeinsam einer Wärmebehandlung mit Sinterung unterzogen, bei der eine stoffschlüssige Verbindung von elektrisch isolierendem Bereich mit einem elektrisch leitenden Bereich erreicht und in der Suspension oder dem Pulver enthaltene organische Komponenten ausgetrieben werden.

Je nach Formgebungsverfahren kann für die Suspensionen eine geeignete Viskosität der jeweiligen Suspensionen eingestellt werden. Hierzu können neben dem flüssigen organischen Binder, der auch mit einem geeigneten Lösungsmittel in der Suspension eingesetzt werden kann, auch weitere bevorzugt organische Stoffe Bestandteil der Suspension sein. Als organischen Binder kann man beispielsweise PVA, Pyrrolodin, ein Wachs oder Paraffin einsetzen.

Die Suspensionen können mittels Drucken, Rakeln, Foliengießen, Spritzgießen, Pressen, Heißpressen, heißisostatischem Pressen oder ein additives Herstellungsverfahren in die jeweils gewünschte Form und direkt dabei oder in einem nachfolgenden Verfahrensschritt in direkten Kontakt gebracht werden, bevor die gemeinsame Sinterung durchgeführt wird. Ggf. kann vor der gemeinsamen Sinterung auch eine Trocknung durchgeführt werden, um einen geeigneten Grünzustand zu erreichen.

Hinsichtlich der keramischen Herstellungstechnologie ist es besonders vorteilhaft, wenn werkstofftechnologisch zumindest nahezu identische Werkstoffe kombiniert werden können, die sich aber trotzdem in ihren elektrischen Eigenschaften unterscheiden. Im Unterschied zu den bisherigen technischen Lösungen gelingt es diese Forderung zu erfüllen, wenn ein dielektrischer Werkstoff durch den Einbau von geringen Mengen von Fremdatomen bzw. Fremd-ionen in das Kristallgitter dotiert werden kann. Dazu sind ein geeignetes Wirtsgitter eines dielektrischen Werkstoffs, wie das TiO₂ und ein geeignetes Dotierungsmittel mit kristallografisch passenden Atomen bzw. Ionen erforderlich. Da Titanoxid in dieser Art elektronisch mit geringen Mengen an Fremdbestandteilen verändert werden kann und durch diese Änderungen die elektrische Leitfähigkeit um mehrere Größenordnungen beeinflussbar ist, ist es ein keramischer Werkstoff, der die oben genannten Anforderungen erfüllt. Der Einbau von hinsichtlich des lonenradius mit dem Ti⁴⁺ ähnlichen Fremdatomen, wie z.B. Nb oder V in das TiO₂-Gitter ist bekannt und führt zur Freisetzung zusätzlicher Ladungsträger im TiO₂-Gitter. Vorgenommene Dotierungen haben wegen ihrer geringen Menge nur einen vernachlässigbaren Einfluss auf die technologischen Parameter zur Keramikherstellung, wodurch es ohne Einschränkungen bei geeigneter Konstellation gelingen kann, dass elektrisch leitfähige und elektrisch isolierende Bereiche in einer gemeinsamen Sinterung als monolithische Komponente herstellbar sind. Besonders vorteilhaft ist es dabei, dass sich die thermische Ausdehnung und auch das Schwindungsverhalten beim Sintern im Vergleich zum undotierten Werkstoff nahezu nicht verändert.

Im Unterschied zu bisherigen technischen Lösungen bei denen verschiedene keramische oder keramische und metallische Komponenten gemischt werden, um unterschiedliche elektrische Leitfähigkeiten über Perkolationvorgänge bereitzustellen, werden mit der Erfindung technologisch gleichartige Komponenten miteinander kombiniert, die sich lediglich um 0,01 Masse-% - 7 Masse-% Dotierungsmittel voneinander unterscheiden müssen, um den gewünschten Effekt der elektrischen Leitfähigkeit zu erreichen. Es ist in der Regel daher ausreichend, dass zur Dotierung nur sehr kleine Mengen eines elektrisch leitenden Elements, einem Oxid oder Carbid davon eingesetzt werden. So kann es genügen maximal 7 Masse-% und mindestens 0,1 Masse-% dem elektrisch nicht leitenden Oxid oder Oxidgemisch mit TiO₂ zuzugeben. Eine Optimierung der Gehalte und der Art der eingesetzten chemischen Elemente oder chemischen Verbindungen für die Dotierung hinsichtlich Sinterverhalten und elektrischer Eigenschaften ist dann mit einer geeigneten Gesamttechnologie zur Herstellung der elektrischen Verbundkomponente möglich.

Durch die Dotierungseffekte können beispielsweise für TiO₂-Werkstoffe Unterschiede beim elektrischen Widerstand um mehrere Größenordnungen eingestellt werden. Nicht dotiertes Titanoxid erreicht etwa einen spezifischen elektrischen Widerstand von 10¹² Ωcm. Erfindungsgemäß dotiertes TiO₂ kann elektrische Widerstände von ca. 10¹-10⁴ Ωcm erreichen.

Neben einer Suspension oder einem Pulver, die/das allein mit pulverförmigem TiO₂ und einem organischen Binder und einem flüssigen Suspensionsmittel gebildet ist, können mindestens zwei unterschiedliche Suspensionen oder Pulvermischungen hergestellt werden, die mit jeweils unterschiedlich dotiertem TiO₂ gebildet sind, wobei sich diese zwei Suspensionen oder Pulvermischungen mit denen unterschiedliche elektrisch leitende Bereiche ausgebildet werden, durch das mindestens eine jeweilige eingesetzte elektrisch leitende Element, Oxid, Carbid oder Nitrid davon für die Dotierung und/oder die Menge des eingesetzten mindestens einen elektrisch leitenden Elements, eines Oxids, Carbids oder Nitrids davon für die Dotierung unterscheiden und die zwei Suspensionen oder Pulvermischungen bei oder nach der Formgebung, bevorzugt in einem Abstand zueinander vor der Sinterung in direkten Kontakt mit dem elektrisch isolierenden Bereich gebracht werden. Pulvermischungen können vor der letztendlichen Formgebung auch zu Granulaten oder Pellets verarbeitet werden.

Es besteht aber auch die Möglichkeit, dass mindestens zwei unterschiedliche Suspensionen oder Pulvermischungen, hergestellt werden, die mit jeweils unterschiedlich dotiertem TiO₂ gebildet sind, wobei sich diese mindestens zwei Suspensionen oder Pulvermischungen mit denen unterschiedliche elektrisch leitende Bereiche ausgebildet werden, mit der mittleren Partikelgröße dso des dotierten Pulvergemischs voneinander unterscheiden. Auch damit können elektrisch leitende Bereiche erhalten werden, die unterschiedliche spezifische elektrische Widerstände aufweisen, da mit kleineren Partikelgrößenverteilungen bei erhöhter Sinteraktivität eine größere Dichte des gesinterten Werkstoffs erreicht werden kann, als dieses mit einer gröberen Partikelgrößenverteilung möglich ist.

Ein Titanion weist einen lonenradius von 0,61 Ä, Ti ⁴⁺ von 0,67 Ä und Ti³⁺ von 0,86 Ä Ti²⁺auf. Für TiO₂ werden die Ti-Gitterplätze vorrangig von Teilchen des Typs Ti⁴⁺ besetzt.

So weisen die als bei der Erfindung geeigneten Dotanden geeigneten Elemente nachfolgend genannte Ionenradien auf:

| | |
|---|---|
| Nb⁵⁺ | 0,64 *Å* |
| Ta⁵⁺ | 0,64 *Å* |
| V⁵⁺ | 0,59 *Å* |
| *In ³⁺* | *0,62 Å* |
| *Ga³⁺* | *0,62 Å* |
| *Sc³⁺* | *0,75 Ä* |

Sie sind ganz besonders für die erfindungsgemäße Nutzung geeignet. Wobei auch andere Elemente geeignet sein können, wenn sie einen Gitterplatz im TiO₂-Gitter besetzen können und elektronische Veränderungen an der Bandstruktur des TiO₂ bewirken.

Für die Herstellung der Suspensionen oder Pulver(mischungen) sollten Pulver mit einer zum Sintern geeigneten Partikelgrößenverteilung eingesetzt werden.

Die mindestens zwei Suspensionen oder Pulver(mischungen) können getrennt aufbereitet und über in der Keramiktechnologie übliche Formgebungsprozesse miteinander verbunden werden. Das Ausheizen der organischen Komponenten, die üblicherweise bei der Formgebung und einem Fügen als Hilfsstoff mit den pulverförmigen Ausgangsmaterialien zum Einsatz kommen und die Sinterung erfolgen gemeinsam oder getrennt, entsprechend den Anforderungen und kann auch unter Luft-Atmosphäre durchgeführt werden, was die Kosten positiv beeinflusst.

Es besteht außerdem die Möglichkeit, dem reinen TiO₂ bzw. einem TiO₂ Gemisch mit ZrO₂ zusätzlich ein elektrisch leitendes Oxid, wie z.B. ZnO zuzugeben. Der Anteil eines elektrisch leitenden Oxids sollte aber unterhalb der Perkolationsschwelle gehalten sein, so dass die elektrische Leitfähigkeit elektrisch leitfähiger Bereiche durch den Einbau von Ionen eines der hier als geeignet genannten elektrisch leitenden Elemente mit entsprechendem lonenradius in das Gitter realisiert wird.

Durch die Anpassung der vorherrschenden kristallographischen Phasen beider Komponenten kann das thermische Ausdehnungsverhalten gesteuert werden und es kann mit den geeigneten technologischen Parametern eine riss- und verzugsfreie Cosinterung, bei der die beiden Komponenten mit denen die unterschiedlichen Bereiche ausgebildet werden im Grünzustand vorliegen, erfolgen. Dabei sollte das Schwindungsverhalten der unterschiedlichen Bereiche weitgehend aufeinander abgestimmt sein. D.h. bei gleichen Temperaturen sollten ungefähr gleiche Schwindungsvorgänge ablaufen, um einen qualitativ hochwertigen Verbund zu erhalten. Das ist mit der Erfindung in der Regel gewährleistet, da die Abweichungen in der Zusammensetzung gering sind. Die elektrischen Eigenschaften der einzelnen unterschiedlichen Bereiche, was die elektrische Leitfähigkeit betrifft, bleiben im Materialverbund erhalten.

Durch die praktisch monolithische Herstellung des Verbundbauteiles ist die elektrische Funktionalität deutlich verbessert gegenüber defektanfälligen Verbunden, wie sie bisher im Einsatz sind. Insbesondere ist es vorteilhaft, dass auch nahezu identische Werkstoffe miteinander versintert sind, die sich weder in der chemischen Zusammensetzung noch im Phasenaufbau aus technologischer Sicht voneinander unterscheiden, was wesentlich zur Zuverlässigkeit und Stabilität des elektrischen Verbundes beiträgt. Es ist auch ein Einsatz bei sehr hohen Temperaturen möglich ohne dass es zu Delaminationen bzw. einem Funktionsverlust kommt.

Die Erfindung kann für Bauteile mit elektrischer Anwendung zum Einsatz kommen zum Beispiel für Elektroden bzw. Plasmaelektroden. Ebenso können weitere elektrische Bauteile aufgebaut werden, die mindesten einen elektrisch leitfähigen und einen elektrisch isolierenden Teil aufweisen. Ebenso können unterschiedlich elektrisch leitfähige oder sich anderweitig elektrisch bzw. elektronisch voneinander unterscheidende Bereiche innerhalb des Verbundes an einem Bauteil miteinander kombiniert werden. Keramische Komponenten sind für Anwendungen mit hoher thermischer, abrasiver oder korrosiver Belastung eine technische Lösung für zahlreiche Einsatzfälle in technologischen Bereichen für innovative Prozesse und in der Elektromobilität.

Der Vorteil dieser Art der Herstellung liegt insbesondere darin, dass zusätzliche Fertigungsschritte für das Fügen der Komponenten mit und ohne Zusatzstoffe, wie z.B. Lote oder Haftvermittler entfallen, so dass allein eine stoffschlüssige Verbindung der unterschiedlichen keramischen Komponenten ausreicht, um ein entsprechendes Verbundbauteil zu erhalten, und das neue Geometrieoptionen ermöglicht werden, die mit gefügten Einzelkomponenten nicht möglich sind.

### Ausführungsbeispiel 1:

Die elektrisch leitende Suspension kann beispielsweise mit TiO₂ mit 0,1 Masse-% und bis 7 Masse-% Nb₂O₅ als Feststoffanteil und 5 Masse-% TiC und eine elektrisch nichtleitende Suspension eines Verbundbauteils kann mit 85 Masse-% TiO₂ und 15 Masse-% ZrO₂ gebildet werden. Beide Suspensionen können mit 10 Masse-% PEG (Polyethylenglykol) und 10 Masse-% Mowiol 4-88 (PVA, Polyvinylalkohol) als organischen Binder und den hier genannten Feststoffzusammensetzungen als hochviskose Paste hergestellt werden.

Die Pasten werden auf einen TiO₂-Grünkörper mittels Siebdruck mit einer Schichtdicke zwischen 20 µm - 100 µm aufgebracht, so dass die elektrisch funktionelle Schicht in der gewünschten Form als Flächendruck auf dem Grünteil entsteht. Dabei wird die elektrisch leitfähige Paste (dotiert) als Kontaktfläche gedruckt. Die elektrisch isolierende Paste wird am Rand der Fläche als Isolationsabstand zu den Kanten gedruckt.

Das bedruckte Grünteil wird einer Trocknung und einem Ausheizregime unterzogen. Da die Schicht relativ dünn ist kann mit einem vorsichtigem Ausheizregime mit einer Aufheizgeschwindigkeit < 1 K/min und einer Haltezeit von jeweils 1 h bei 300° C und 400 °C und einer Maximaltemperatur von 600 °C unter Luft eine defektfreie Schicht auf dem TiO₂-Grünkörper erhalten werden.

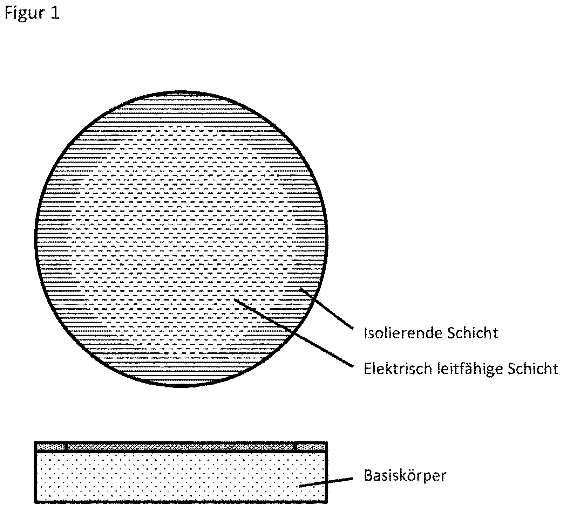

Das ausgeheizte Bauteil wird einem unmittelbar anschließenden Sinterprozess mit einer folgenden Aufheizgeschwindigkeit von 3 K/min -5 K/min bis zu 1400 °C unterzogen. Bei 1400 °C wird die Temperatur über 1 h gehalten und das Bauteil mit einer Geschwindigkeit von maximal 5 K/min auf Raumtemperatur abgekühlt. Die aufgedruckte Schicht bildet eine ebene Fläche und ist an den Rändern elektrisch isolierend und im Zentrum elektrisch leitfähig. Die Sinterschwindung der Schicht und des Basisgrünkörpers sind aufeinander angepasst und liegen bei ca. 20 % Längsschwindung. In dieser Geometrie kann das Bauteil als Elektrode für Hochspannungsfelder eingesetzt werden, (siehe Figur 1)

### Ausführungsbeispiel 2:

Dabei zeigt:
Figur 1 ein Beispiel, das gemäß der nachfolgenden Beschreibung hergestellt worden ist.

Die elektrisch isolierende Suspension wird aus einem TiO₂-Pulver (Rutil-Modifikation) der Firma Kronos (Kronos 3025) in einem Attritor mit 1000 g ZrO₂-Mahlkugeln hergestellt. Dazu werden beispielsweise 200 g TiO₂ in 250 ml Wasser mit organischen Hilfsstoffen 2,5 Masse-% KST-Wachs, 0,5 Masse-% PEG (Polyethylenglykol) und 0,5 Masse-% Mowiol 4-88 (PVA, Polyvinylalkohol) (Zschimmer & Schwarz). Die Mahldauer beträgt 6 h bei 1000 U/min. Auf Wasser oder eine andere Flüssigkeit kann ggf. verzichtet und nur die unterschiedlichen Pulver mit organischem Binder weiter verarbeitet und zur Formgebung eingesetzt werden.

Diese elektrisch leitfähige Suspension oder ein trockenes Pulver-Bindergemisch wird wie die elektrische isolierende Suspension bzw. ein entsprechendes Pulver hergestellt. Zusätzlich wird der Suspension bzw. dem Pulver 0,7 Masse-% Nb₂O₅ bezogen auf den TiO₂-Anteil zugesetzt.

Die aus der Attritormahlung erhaltenen Suspensionen oder Pulvermischungen werden im Gefriertrockner getrocknet und stehen nach der Trocknung als pressfähige Granulate zur Verfügung.

Die so erhaltenen Granulen werden in einer uniaxialen Presse in einer Pressform mit Ø 30 mm zu Formkörpern gemeinsam verpresst. Dazu wird das isolierende Granulat zuerst in die Form geschüttet und mit einem geringen Druck (< 20 MPa) zu einem Zylinder mit ca. 4 mm Dicke vorverdichtet. Die Form wird wieder geöffnet und so viel elektrisch leitfähiges Granulat eingeschüttet, dass im Grünkörper eine Schicht von ca. 1 mm Dicke entsteht. Die Pressform wird wieder geschlossen und einem Pressdruck von mindestens 30 MPa und maximal 50 MPa ausgesetzt. Der gewonnene Formkörper wird der Pressform entnommen und in eine flüssigkeitsdichte Gummifolie verpackt. Anschließend erfolgt eine kaltisostatische Nachverdichtung bei 150 MPa Druck. Nach diesem Prozessschritt ist ein kompakter gut handhabbarer Verbund gebildet.

Die erhaltenen Grünkörper werden eine Ausheizfahrt zum Ausbrennen der organischen Hilfsstoffe unterzogen. Dazu werden dir Formkörper auf 600 °C unter Luft und mit einer Aufheizrate/Aufheizgeschwindigkeit von 1 K/min erwärmt und 2 h bei 600 °C gehalten. Anschließend werden die Formkörper wieder abgekühlt.

Die Sinterung erfolgt bei 1350 °C unter Luft. Die Aufheizgeschwindigkeit beträgt 5 K/min und die Haltezeit 1 h bei der maximalen Sintertemperatur.

Die hergestellten Formkörper weisen eine Schwindung im Bereich von 18-20 % mit Bezug zu der Ausgangslänge der Stäbe auf. Die verbleibende Restporosität der so gesinterten Verbunde liegt bei < 5 % offener Porosität.

Der elektrische Widerstand des isolierenden Bereichs ist in der Größenordnung von 10¹² Ωcm. Der elektrische Widerstand bei 25 °C des elektrisch leitfähigen Bereichs liegt in der Größenordnung von < ·10³ Ωcm. Dieser elektrische Widerstand ist stark temperaturabhängig und erreicht bei 400 °C einen Wert von 2,7 Ωcm.

## Patentansprüche

1. Keramisches Verbundbauteil, das mindestens einen elektrisch isolierenden Bereich und mindestens einen elektrisch leitenden Bereich aufweist, die stoffschlüssig durch eine gemeinsame Sinterung miteinander verbunden sind und dabei
ein elektrisch isolierender Bereich aus TiO₂ oder mehr als 40 Masse-% TiO₂ und weniger als 60 Masse-% ZrO₂ als Feststoffanteil und mindestens ein elektrisch leitender Bereich aus dotiertem TiO₂, das mit TiO₂ und zusätzlich weniger als 50 Masse-% und mindestens einem Anteil von 0,01 Masse-% eines elektrisch leitenden Elements oder einem Oxid, Carbid oder Nitrid des elektrisch leitenden Elements dotiert ist, wobei
das elektrisch leitende Element oder das Oxid, Carbid oder Nitrid dieses elektrisch dotierenden Elements einen lonenradius aufweist, der um maximal 20 % vom lonenradius von Titan abweicht.

2. Verbundbauteil nach Anspruch 1, **dadurch gekennzeichnet, dass** ein elektrisch leitende für die Dotierung eingesetzte Element ausgewählt ist aus Nb, Ta, V, In, Ga, Sc, Ir, Cr, Ho, Ce und Ge.

3. Verbundbauteil nach einem der vorhergehenden Ansprüche, **dadurch gekennzeichnet, dass** mindestens ein elektrisch isolierender Bereich mit mindestens zwei elektrisch leitenden Bereichen stoffschlüssig verbunden ist, wobei
die elektrisch leitenden Bereiche mit dotiertem TiO₂ und jeweils einem unterschiedlich großen Anteil des mindestens einen elektrisch leitenden Elements, eines Oxids, Carbids oder Nitrids des elektrisch leitenden Elements oder
mit jeweils mindestens einem anderen elektrisch leitenden Element, Oxid, Carbid oder Nitrid des elektrisch leitenden Elements, das nach Anspruch 2 ausgewählt ist, gebildet sind, so dass elektrisch leitende Bereiche mit voneinander unterschiedlichen spezifischen elektrischem Widerstand vorhanden sind.

4. Verbundbauteil nach dem vorhergehenden Anspruch, **dadurch gekennzeichnet, dass** mindestens zwei elektrisch leitende Bereiche in einem Abstand zueinander oder
unmittelbar nebeneinander angeordnet sind.

5. Verbundbauteil nach einem der vorhergehenden Ansprüche, **dadurch gekennzeichnet, dass** das Verbundbauteil eine Elektrode mit einem Elektrodenträger, eine Glühkerze, ein elektrisches Widerstandsheizelement oder elektrischer Kontakt ist.

6. Verfahren zur Herstellung eines Verbundbauteils nach einem der vorhergehenden Ansprüche, **dadurch gekennzeichnet, dass** für die Herstellung eines elektrisch isolierenden Bereichs eine erste Suspension oder ein Pulver, bestehend aus pulverförmigem TiO₂ oder mehr als 40 Masse-% TiO₂ und weniger als 60 Masse-% ZrO₂ als Feststoffanteil und einem organischen Binder und
für die Herstellung eines elektrisch leitenden Bereichs eine Suspension oder Pulver einer Mischung aus pulverförmigem TiO₂ und weniger als 50 Masse-% und mindestens einem Anteil von 0,01 Masse-% eines elektrisch leitenden Elements oder einem Oxid, Carbid oder Nitrid des elektrisch leitenden Elements, dessen lonenradius um maximal 20 % vom lonenradius von Titan abweicht, und einem organischen Binder hergestellt werden und
die zwei unterschiedlichen Suspensionen oder Pulver in eine jeweils gewünschte Form und miteinander in direkten Kontakt gebracht und anschließend die so miteinander verbundenen Bereiche gemeinsam einer Wärmebehandlung mit Sinterung unterzogen werden, bei der eine stoffschlüssige Verbindung von elektrisch isolierendem Bereich mit einem elektrisch leitenden Bereich erreicht und in der Suspension oder Pulver enthaltene organische Komponenten ausgetrieben werden.

7. Verfahren nach dem vorhergehenden Anspruch, **dadurch gekennzeichnet, dass** die Suspensionen oder Pulver mittels Drucken, Rakeln, Foliengießen, Spritzgießen, Pressen, Heißpressen, heißisostatischem Pressen oder einem additiven Herstellungsverfahren in die jeweils gewünschte Form und direkt dabei oder in einem nachfolgenden Verfahrensschritt in direkten Kontakt gebracht werden, bevor die gemeinsame Sinterung durchgeführt wird.

8. Verfahren nach einem der zwei vorhergehenden Ansprüche, **dadurch gekennzeichnet, dass** neben der Suspension oder dem Pulver, die/das allein mit pulverförmigem TiO₂ oder mehr als 40 Masse-% TiO₂ und weniger als 60 Masse-% ZrO₂ als Feststoffanteil und einem organischen Binder gebildet ist, mindestens zwei unterschiedliche Suspensionen oder Pulver hergestellt werden,
die mit jeweils unterschiedlich dotiertem TiO₂ gebildet sind, wobei sich diese zwei Suspensionen oder Pulver mit denen unterschiedliche elektrisch leitende Bereiche ausgebildet werden, durch das mindestens eine jeweilige eingesetzte elektrisch leitende und für die Dotierung eingesetzte Element, Oxid, Carbid oder Nitrid davon und/oder die Menge des eingesetzten mindestens einen elektrisch leitenden Elements, eines Oxids, Carbids oder Nitrids davon unterscheiden und die zwei Suspensionen oder Pulver bei oder nach der Formgebung, bevorzugt in einem Abstand zueinander vor der Sinterung in direkten Kontakt mit dem elektrisch isolierenden Bereich gebracht werden.

9. Verfahren nach einem der drei vorhergehenden Ansprüche, **dadurch gekennzeichnet, dass** mindestens zwei unterschiedliche Suspensionen oder Pulvermischungen hergestellt werden, die mit jeweils unterschiedlich dotiertem TiO₂ gebildet sind, wobei sich diese zwei Suspensionen oder Pulvermischungen mit denen unterschiedliche elektrisch leitende Bereiche ausgebildet werden, mit der mittleren Partikelgröße dso des dotierten Pulvergemischs voneinander unterscheiden.
